**Europäisches Patentamt**

**European Patent Office**

**Office européen des brevets**

(19)

(11) Veröffentlichungsnummer : **0 597 133 B1**

(12)                    **EUROPÄISCHE PATENTSCHRIFT**

(45) Veröffentlichungstag der Patentschrift :
31.05.95 Patentblatt 95/22

(51) Int. Cl.⁶ : **G06K 13/04,** G06K 13/07

(21) Anmeldenummer : **92119016.1**

(22) Anmeldetag : **06.11.92**

(54) **Vorrichtung zur Verarbeitung von kartenförmigen Datenträgern.**

(43) Veröffentlichungstag der Anmeldung :
**18.05.94 Patentblatt 94/20**

(45) Bekanntmachung des Hinweises auf die
Patenterteilung :
**31.05.95 Patentblatt 95/22**

(84) Benannte Vertragsstaaten :
**CH DE ES FR GB LI NL SE**

(56) Entgegenhaltungen :
**EP-A- 0 302 376**
**FR-A- 2 315 131**

(73) Patentinhaber : **SCHEIDT & BACHMANN
GMBH
Breite Strasse 132
D-41238 Mönchengladbach (DE)**

(72) Erfinder : **Crynen, Norbert, Dipl.-Ing.
Wolfsittard 133c
W-4050 Mönchengladbach 5 (DE)**

(74) Vertreter : **Stenger, Watzke & Ring
Patentanwälte
Kaiser-Friedrich-Ring 70
D-40547 Düsseldorf (DE)**

**Beschreibung**

Vorrichtung zur Verarbeitung von kartenförmigen Datenträgern

Die Erfindung betrifft eine Vorrichtung zur Verarbeitung von kartenförmigen Datenträgern mit einer zylindrischen Aufnahmetrommel, die mit einem durch die Aufnahmetrommel durchgehenden Kartenschacht versehen und um mindestens 180° um eine quer zur Längsrichtung des Kartenschachtes verlaufende Achse verdrehbar gelagert ist und der mindestens ein außerhalb der Aufnahmetrommel liegender Schacht für den Weitertransport oder eine zeitlich begrenzte Zwischenspeicherung der Datenträger zugeordnet ist, wobei sowohl der trommelseitige Kartenschacht als auch der außerhalb der Aufnahmetrommel liegende Schacht mit Transportmitteln für die Datenträger, insbesondere Transportwalzen oder über Walzen geführten Transportbändern versehen ist.

Aus der EP-A1-0 118 730 sind Vorrichtungen zum Lesen und Beschreiben von Magnetkarten bekannt, die eine Dreh-Wende-Vorrichtung umfassen, so daß die zu verarbeitenden Magnetkarten der Vorrichtung in jeder möglichen Orientierung zugeführt werden können. Die zum Lesen und ggf. Beschreiben der kartenförmigen Datenträger notwendige Position wird mit Hilfe der Dreh-Wende-Vorrichtung erreicht.

In der nicht vorveröffentlichten EP-A-0 521 173 ist darüber hinaus eine Dreh-Wende-Einrichtung beschrieben, die mit einer zylindrischen Aufnahmetrommel für die kartenförmigen Datenträger versehen ist. Die Kartentrommel umfaßt einen diagonal durchgehenden Kartenschacht und ist um mindestens 180° um eine quer zur Längsrichtung des Kartenschachtes verlaufende Achse verdrehbar gelagert.

Der Erfindung liegt die **Aufgabe** zugrunde, eine Vorrichtung der voranstehend beschriebenen Art zur Verarbeitung von kartenförmigen Datenträgern derart weiterzubilden, daß für die Transportmittel im Kartenschacht der Aufnahmetrommel und in den der Aufnahmetrommel zugeordneten Schächten nur ein einziger Antrieb erforderlich ist.

Die **Lösung** dieser Aufgabenstellung durch die Erfindung ist dadurch gekennzeichnet, daß die Transportmittel des trommelseitigen, radial durch die Mittelachse der Aufnahmetrommel verlaufenden Kartenschachtes von einem konzentrisch zur Achse der Aufnahmetrommel angeordneten Antriebsrad antreibbar sind und daß im Bereich mindestens eines Endes des trommelseitigen Kartenschachtes ein Kupplungsrad angeordnet ist, das den Antrieb der in der Aufnahmetrommel angeordneten Transportmittel mit einem Antriebsrad der Transportmittel desjenigen außerhalb der Aufnahmetrommel liegenden und zu dieser radial verlaufenden Schachtes verbindet, der in der jeweiligen Stellung der Aufnahmetrommel in radialer Verlängerung des trommelseitigen Kartenschachtes verläuft.

Durch die erfindungsgemäße Kupplung des im jeweils von der Aufnahmetrommel angesteuerten Schachtes angeordneten Antriebsrades mittels des an mindestens einem Ende des Kartenschachtes angeordneten Kupplungsrades mit dem Antrieb der in der Aufnahmetrommel angeordneten Transportmittel kann der für diese Transportmittel vorgesehene Antriebsmotor auch zum Antrieb derjenigen Transportmittel herangezogen werden, die im jeweils angesteuerten Schacht angeordnet sind. Hierdurch erfolgt nicht nur eine erhebliche Reduzierung der insgesamt notwendigen Antriebsmotore, sondern zugleich eine vereinfachte Steuerung der Transportmittel, da immer nur diejenigen Transportmittel angetrieben werden können, die im jeweils angesteuerten Schacht vorhanden sind.

Gemäß einem weiteren Merkmal der Erfindung ist das Kupplungsrad mittels eines in der Aufnahmetrommel angeordneten Elektromagneten zwischen einer Außereingriffstellung und einer Kupplungsstellung axial verstellbar. Auf diese Weise ergibt sich eine einfache und zuverlässige Betätigung des Kupplungsrades.

Bei einer bevorzugten Ausführungsform der Erfindung sind das Kupplungsrad und die mit ihm zusammenwirkenden Räder der einerseits im Kartenschacht und andererseits in den anzusteuernden Schächten angeordneten Transportmittel als Trapezzahnräder ausgebildet. Hierdurch ergibt sich bei geringstmöglicher axialer Verlagerung des Kupplungsrades zwischen Außereingriff- und Kupplungsstellung ein stets zuverlässiger Zahneingriff in der Kupplungsstellung.

Auf der Zeichnung ist ein Ausführungsbeispiel der erfindungsgemäßen Vorrichtung dargestellt, und zwar zeigen:

Fig. 1       eine schematische Seitenansicht einer Vorrichtung,

Fig. 2       eine vergrößerte Darstellung der Aufnahmetrommel sowie der zugeordneten Schächte mit eingezeichneten Transportmitteln und

Fig. 3       eine schematische Draufsicht auf die Darstellung nach Fig. 2.

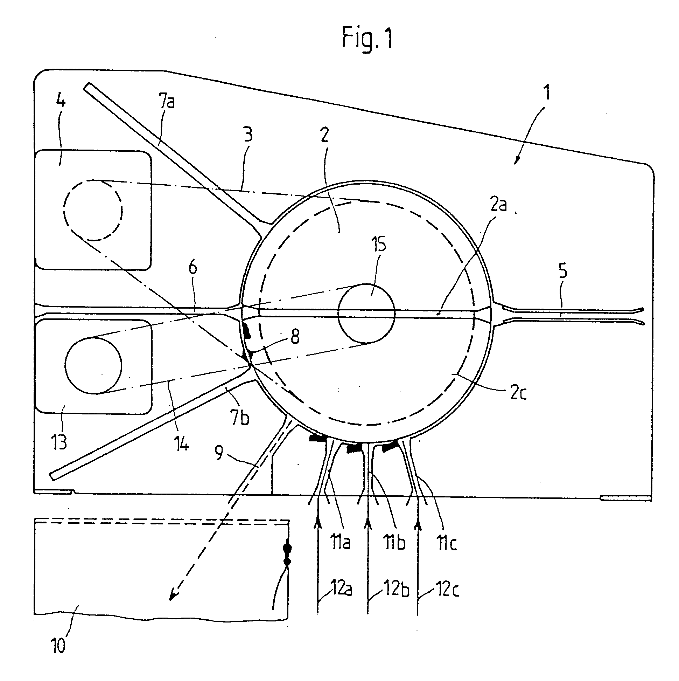

Die auf den Zeichnungen nur schematisch dargestellte Vorrichtung umfaßt ein Gehäuse 1, in dem eine zylindrische Aufnahmetrommel 2 um eine Achse 2b drehbar gelagert ist. Der Drehantrieb erfolgt über eine mit der Aufnahmetrommel 2 fest verbundene Zahnriemenscheibe 2c mittels eines Zahnriemens 3 durch einen Schrittmotor 4. Im Gehäuse 1 ist außer einem Eingabeschacht 5 ein Durchgangsschacht 6 ausgebildet. Diese beiden Schächte können durch einen in der Aufnahmetrommel 2 ausgebildeten Kartenschacht 2a miteinander verbunden werden. Sowohl im Eingabeschacht 5 und Durchgangsschacht 6 als auch im Kartenschacht 2a sind Transportmittel für die zu verarbeitenden kartenförmigen Datenträger angeordnet. Diese Transportmittel sind der besseren Übersichtlichkeit wegen in Fig. 1 nicht dargestellt.

Dem Eingabeschacht 5 bzw. Durchgangsschacht 6 sind weiterhin eine Kodier- und Leseeinheit sowie ein Drucker, vorzugsweise Thermodrucker zugeordnet. Diese auf der Zeichnung ebenfalls nicht dargestellten Bauteile können auch innerhalb des Gehäuses 1 angeordnet sein. Sie werden zum Kodieren, Lesen und Beschreiben der kartenförmigen Datenträger verwendet.

Um bei der Verarbeitung der Datenträger diese innerhalb des Gehäuses 1 zwischenlagern zu können, sind der Aufnahmetrommel 2 beim dargestellten Ausführungsbeispiel zwei Parkschächte 7a,7b zugeordnet, die ebenfalls mit in Fig. 1 nicht dargestellten Transportmitteln versehen sind und durch eine geeignete Verdrehung der Aufnahmetrommel 2 mit Hilfe des Schrittmotors 4 angesteuert werden. Die Grundstellung der Aufnahmetrommel 2 wird beim Ausführungsbeispiel durch einen als Hallsensor ausgebildeten Positionsgeber 8 bestimmt. Ungültige, abgenutzte, entwertete oder auf andere Weise nicht entnommene Datenträger können über einen der Aufnahmetrommel 2 zugeordneten Karteneinzugkanal 9 einem Auffangbehälter 10 zugeführt werden.

Der Aufnahmetrommel 2 sind beim dargestellten Ausführungsbeispiel weiterhin drei Zufuhrkanäle 11a,11b,11c zugeordnet, über die der Aufnahmetrommel 2 Kartenrohmaterial 12a,12b,12c zugeführt wird. Hierbei handelt es sich um Rollen oder Stapel aus Papier, Pappe, Dünn- oder Dickplastik, die mit Mittel- und/oder Seitenmagnetstreifen versehen sind. Dieses bis in die Mündung des jeweiligen Zufuhrkanals 11a,11b,11c eingeführte Kartenrohmaterial 12a,12b,12c wird durch eine geeignete Transportvorrichtung in den Kartenschacht 2a der Aufnahmetrommel 2 eingezogen, sobald die Aufnahmetrommel 2 zwecks Herstellung eines neuen kartenförmigen Datenträgers den jeweiligen Zufuhrkanal 11a bzw. 11b bzw. 11c angesteuert hat.

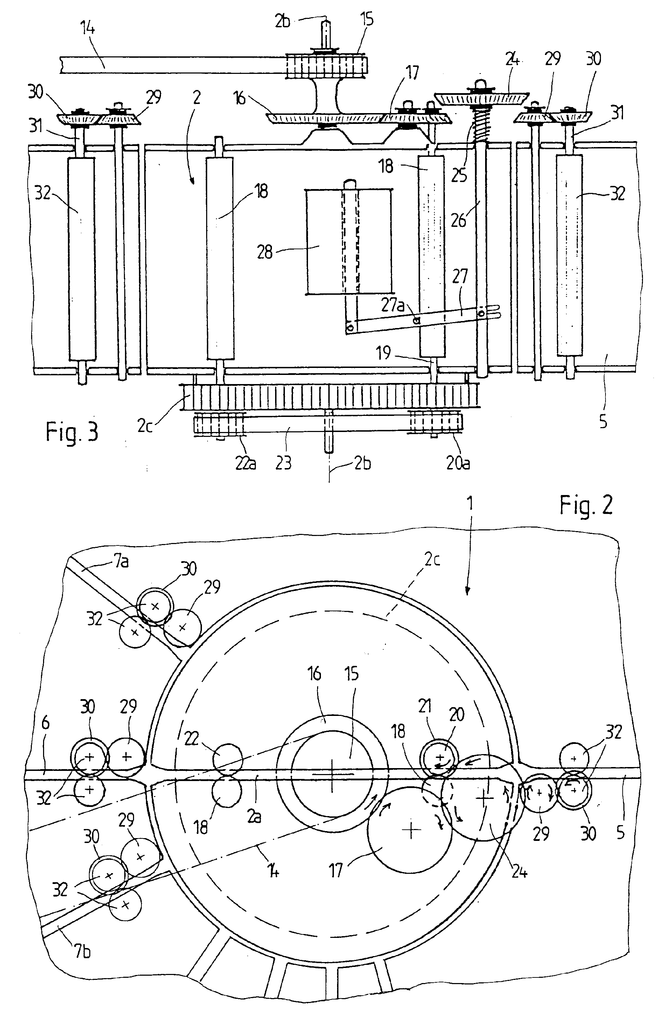

In den Fig. 2 und 3 sind die im Kartenschacht 2a sowie in den von der Aufnahmetrommel 2 ansteuerbaren Kanälen 5,6,7a und 7b angeordneten Transportmittel dargestellt.

Der Antrieb dieser später zu beschreibenden Transportmittel erfolgt durch einen in Fig. 1 eingezeichneten Antriebsmotor 13 über einen Zahnriemen 14 und eine an der Aufnahmetrommel 2 konzentrisch zu deren Achse 2b drehbar gelagerte Riemenscheibe 15. Diese Riemenscheibe 15 ist starr mit einem zentralen Antriebsrad 16 verbunden. Wie insbesondere Fig. 2 zeigt, kämmt dieses zentrale Antriebsrad 16 mit einem Zwischenrad 17, das im Bereich des einen Endes des Kartenschachtes 2a angeordnet ist. In der Folge des Zwischenrades 17 ist in der Aufnahmetrommel 2 weiterhin ein Kupplungsrad 24 frei drehbar auf einer entgegen der Kraft einer Feder 25 axial beweglichen Achse 26 angeordnet. Die Achse 26 kann mittels eines um einen Lagerzapfen 27a verschwenkbaren Hebels 27 durch einen Elektromagneten 28 axial betätigt werden.

Auf diese Weise ist es möglich, das in axialer Richtung unverschiebbar auf der Achse 26 angeordnete Kupplungsrad 24 aus der in Fig. 3 gezeichneten Außereingriffstellung in eine Kupplungsstellung zu überführen, in der das Kupplungsrad 24 einerseits in das treibende Zwischenrad 17 und andererseits in ein Antriebsrad 29 und in das Zahnrad 21 greift.

Ein derartiges Antriebsrad 29 ist in der Mündung sowohl des Eingabeschachtes 5 als auch des Durchgangsschachtes 6 und der Parkschächte 7a und 7b angeordnet. Das Zahnrad 21 ist im einen Ende des Kartenschachtes 2a auf derselben Welle 19, wie eine Transportwalze 20 unverdrehbar angeordnet. Diese bilden mit einer weiteren Transportwalze 18 ein Walzenpaar. Im anderen Ende des Kartenschachtes 2a ist ein weiteres Walzenpaar 22,18 angeordnet. Der Antrieb dieses Walzenpaares erfolgt gemäß Fig. 3 synchron zum Walzenpaar 20,18 durch einen Zahnriemen 23, der über Riemenscheiben 20a bzw. 22a geführt ist und auf diese Weise die Transportwalzen 20 und 22 miteinander verbindet.

Bei dem in Fig. 3 dargestellten Ausführungsbeispiel sind das Antriebsrad 16, das Zwischenrad 17, das Kupplungsrad 24 und die Antriebsräder 29 als Trapezzahnräder ausgebildet. Jedes Antriebszahnrad 29 kämmt mit einem Zahnrad 30, das gemäß Fig. 3 unverdrehbar auf einer Welle 31 befestigt ist, die weiterhin eine Transportwalze 32 eines im Mündungsbereich jedes Schachtes 5,6,7a,7b angeordneten Transportwalzenpaares trägt. Diese Transportwalzen 32 stellen zumindest einen Teil der im jeweiligen Schacht 5,6,7a,7b angeordneten Transportmittel dar. Beim Vorhandensein weiterer Transportwalzen sind diese beispielsweise wie die Transportwalzen 20 und 22 im Kartenschacht 2a der Aufnahmetrommel 2 miteinander durch Zahnriemen verbunden.

Mit der voranstehend beschriebenen Konstruktion werden nicht nur die aus den beiden Transportwalzenpaaren 20 und 22 bestehenden Transportmittel im Kartenschacht 2a über den Zahnriemen 14 vom Antriebsmotor 13 angetrieben, sondern auch die durch die Transportwalzen 32 gebildeten Transportmittel in den der Aufnahmetrommel 2 zugeordneten Schächten 5,6 sowie 7a und 7b. Hierbei erfolgt jeweils nur ein Antrieb der Transportmittel desjenigen Schachtes, der jeweils von der Aufnahmetrommel 2 angesteuert worden ist. Sobald die Aufnahmetrommel 2 in die vorgesehene Ansteuerungsstellung verdreht worden ist, erfolgt mittels des Elektromagneten 28 eine Überführung des Kupplungsrades 24 in seine Kupplungsstellung. In dieser Kupplungsstellung verbindet das Kupplungsrad 24 das Antriebsrad 29 des jeweils angesteuerten Kanals mit dem Antrieb der Transportmittel in der Aufnahmetrommel 2, so daß eine einwandfreie Übergabe des jeweils zu transportierenden kartenförmigen Datenträgers zwischen dem angesteuerten Schacht und dem Kartenschacht 2a in der Aufnahmetrommel 2 erfolgt. Die Transportrichtung wird hierbei durch die Drehrichtung des Antriebsmotors 13 bestimmt.

**Bezugszeichenliste :**

| | |
|---|---|
| 1 Gehäuse | 23 Zahnriemen |
| 2 Aufnahmetrommel | 24 Kupplungsrad |
| 2a Kartenschacht | 25 Feder |
| 2b Achse | 26 Achse |
| 2c Zahnriemenscheibe | 27 Hebel |
| 3 Zahnriemen | 27a Lagerzapfen |
| 4 Schrittmotor | 28 Elektromagnet |
| 5 Eingabeschacht | 29 Antriebsrad |
| 6 Durchgangsschacht | 30 Zahnrad |
| 7a Parkschacht | 31 Welle |
| 7b Parkschacht | 32 Transportwalze |
| 8 Positionsgeber | |
| 9 Karteneinzugkanal | |
| 10 Auffangbehälter | |
| 11a Zufuhrkanal | |
| 11b Zufuhrkanal | |
| 11c Zufuhrkanal | |
| 12a Kartenrohmaterial | |
| 12b Kartenrohmaterial | |
| 12c Kartenrohmaterial | |
| 13 Antriebsmotor | |
| 14 Zahnriemen | |
| 15 Riemenscheibe | |
| 16 Antriebsrad | |
| 17 Zwischenrad | |
| 18 Transportwalze | |
| 19 Welle | |
| 20 Transportwalze | |
| 20a Riemenscheibe | |
| 21 Zahnrad | |
| 22 Transportwalze | |
| 22a Riemenscheibe | |

EP 0 597 133 B1

**Patentansprüche**

1. Vorrichtung zur Verarbeitung von kartenförmigen Datenträgern mit einer zylindrischen Aufnahmetrommel (2), die mit einem durch die Aufnahmetrommel durchgehenden Kartenschacht (2a) versehen und um mindestens 180° um eine quer zur Längsrichtung des Kartenschachtes (2a) verlaufende Achse (2b) verdrehbar gelagert ist und der mindestens ein außerhalb der Aufnahmetrommel liegender Schacht (5, 6, 7a, 7b) für den Weitertransport oder eine zeitlich begrenzte Zwischenspeicherung der Datenträger zugeordnet ist, wobei sowohl der trommelseitige Kartenschacht (2a) als auch der außerhalb der Aufnahmetrommel liegende Schacht (5, 6, 7a, 7b) mit Transportmitteln für die Datenträger, insbesondere Transportwalzen oder über Walzen geführten Transportbändern versehen ist,
**dadurch gekennzeichnet,**
daß die Transportmittel (20, 22) des trommelseitigen, radial durch die Mittelachse der Aufnahmetrommel (2) verlaufenden Kartenschachtes (2a) von einem konzentrisch zur Achse (2b) der Aufnahmetrommel (2) angeordneten Antriebsrad (16) antreibbar sind und daß im Bereich mindestens eines Endes des trommelseitigen Kartenschachtes (2a) ein Kupplungsrad (24) angeordnet ist, das den Antrieb der in der Aufnahmetrommel (2) angeordneten Transportmittel (20, 22) mit einem Antriebsrad (29) der Transportmittel (32) desjenigen außerhalb der Aufnahmetrommel liegenden und zu dieser radial verlaufenden Schachtes (5, 6, 7a, 7b) verbindet, der in der jeweiligen Stellung der Aufnahmetrommel (2) in radialer Verlängerung des trommelseitigen Kartenschachtes (2a) verläuft.

2. Vorrichtung nach Anspruch 1, dadurch gekennzeichnet, daß das Kupplungsrad (24) mittels eines in der Aufnahmetrommel (2) angeordneten Elektromagneten (28) zwischen einer Außereingriffsstellung und einer Kupplungsstellung axial verstellbar ist.

3. Vorrichtung nach Anspruch 1 oder 2, dadurch gekennzeichnet, daß das Kupplungsrad (24) und die mit ihm zusammenwirkenden Räder (17, 21, 29) der einerseits im trommelseitigen Kartenschacht (2a) und andererseits in den anzusteuernden, außerhalb der Aufnahmetrommel liegenden Schächten (5, 6, 7a, 7b) angeordneten Transportmittel (18, 20, 22; 32) als Trapezzahnräder ausgebildet sind.

**Claims**

1. Device for processing card-shaped data carriers having a cylindrical holding drum (2), which is provided with a card slot (2a) penetrating through the holding drum and is supported so as to be able to be rotated through at least 180° about an axis (2b) extending transversely to the longitudinal direction of the card slot (2a) and to which is assigned at least one slot (5, 6, 7a, 7b) located outside the holding drum for the further transport or the intermediate storage for a limited time of the data carriers, both the card slot (2a) on the drum side and the slot (5, 6, 7a, 7b) located outside the holding drum being provided with transport means for the data carriers, especially transport rollers or transport belts guided over rollers, characterized in that the transport means (20, 22) of the card slot (2a) on the drum side, extending radially through the central axis of the holding drum (22) can be driven by a drive wheel (16) arranged concentrically to the axis (2b) of the holding drum (2) and in that, in the region of at least one end of the card slot (2a) on the drum side, there is arranged a coupling wheel (24) which connects the drive of the transport means (20, 22) arranged in the holding drum (2) to a drive wheel (29) of the transport means (32) of that slot (5, 6, 7a, 7b) located outside the holding drum and extending radially to the latter, which slot extends in radial extension of the card slot (2a) on the drum side in the respective position of the holding drum (2).

2. Device according to Claim 1, characterized in that the coupling wheel (24) can be displaced axially between an outer engagement position and a coupling position by means of an electromagnet (28) arranged in the holding drum (2).

3. Device according to Claim 1 or 2, characterized in that the coupling wheel (4) and the wheels (17, 21, 29) interacting with it of the transport means (18, 20, 22; 32) arranged on the one hand in the card slot (2a) on the drum side and on the other hand in the slots (5, 6, 7a, 7b) to be driven and lying outside the holding drum are designed as trapezoidal gear wheels.

5

**Revendications**

1. Dispositif de traitement de supports d'informations en forme de carte, comportant un tambour de réception (2) cylindrique, qui est pourvu d'un puits à carte (2a) traversant le tambour de réception et qui est monté de façon à pouvoir tourner de 180° au moins autour d'un axe (2b) perpendiculaire à l'axe longitudinal du puits à carte (2a) et auquel est associé au moins un puits (5, 6, 7a, 7b) situé en dehors du tambour de réception et destiné à la poursuite de l'acheminement du support d'informations ou à un stockage intermédiaire limité dans le temps, le puits à carte (2a) côté tambour non seulement, mais encore le puits (5, 6, 7a, 7b) situé en dehors du tambour de réception étant pourvus de moyens d'acheminement des supports d'informations, notamment de cylindres d'acheminement ou de bandes transporteuses entraînées par l'intermédiaire de cylindres

   caractérisé en ce que

   les moyens d'acheminement (20, 22) du puits à carte (2a) situé côté tambour et passant radialement par l'axe du tambour de réception (2) peuvent être entraînés par une roue motrice (16) placée de façon concentrique par rapport à l'axe (2b) du tambour de réception (2) et en ce qu'une roue d'accouplement (24) est disposée à proximité d'une extrémité au moins du puits à carte (2a) situé côté tambour, laquelle relie l'entraînement des moyens d'acheminement (20, 22) disposés dans le tambour de réception (2) à une roue motrice (29) des moyens d'acheminement (32) de celui des puits (5, 6, 7a, 7b) situé en dehors du tambour de réception et radialement par rapport à ce dernier qui, dans la position du moment du tambour de réception (2), s'étend dans le prolongement radial du puits à carte (2a) côté tambour.

2. Dispositif selon la revendication 1, caractérisé en ce que la roue d'accouplement (24) peut être déplacée axialement entre une position débrayée et une position d'accouplement au moyen d'un électroaimant (28) placé dans le tambour de réception (2).

3. Dispositif selon la revendication 1 ou 2, caractérisé en ce que la roue d'accouplement (24) et les roues (17, 21, 29) qui se combinent avec elle appartenant aux moyens d'acheminement (18, 20, 22 ; 32) disposés d'une part dans le puits à carte (2a) côté tambour et, d'autre part, dans les puits (5, 6, 7a, 7b) de destination situés en dehors du tambour de réception sont réalisées sous la forme de roues à dents trapézoïdales.

Fig. 1

Fig. 3

Fig. 2